# EUROPEAN PATENT APPLICATION

(11) **EP 3 817 308 A1**
(43) Date of publication of application: **05.05.2021**
(21) Application number: 18925455.0
(22) Date of filing: 21.08.2018
(51) Int. Cl.: H04L 12/741

(54) **METHOD, DEVICE AND SYSTEM FOR RESPONDING TO REQUEST AND APPLIED TO BT SYSTEM**

(30) Priority: 03.07.2018 CN 201810716673
(71) Applicant: Wangsu Science & Technology Co., Ltd., Shanghai 200030 (CN)
(72) Inventor: CHEN, Kailin, Shanghai 200030 (CN); CHEN, Jiawei, Shanghai 200030 (CN)
(74) Representative: de Arpe Fernandez, Manuel
(86) International application number: PCT/CN2018/101520
(87) International publication number: WO 2020/006823

(57) **Abstract**

Device and system applied to a bit torrent (BT) system are provided. By directly acquiring the data traffic from a network export device, and responding to the target peer acquisition requests, the target peer acquisition requests are ensured to receive quick response. Also, preferred peer nodes, such as other BT client terminals or cache servers that have physical locations close to and/or share a same network operator with the target BT client terminal, or cache servers that cache all requested resources are selected according to a preset policy to respond the target peer acquisition requests.

## Description

### FIELD OF THE DISCLOSURE

The present disclosure relates to the field of data transmission technology and, more particularly, relates to a request response method, a device, and a system applied to a bit torrent (BT) system.

### BACKGROUND

The bit torrent (BT) protocol is a computer communication protocol widely used for resource sharing between nodes in peer-to-peer networks. A BT system is a resource download system built based on the BT protocol, and includes BT client terminals and tracker servers.

In the BT download mode, each BT resource may be divided into multiple equally-sized data blocks. Before starting to download a BT resource, a BT client terminal may send a peer acquisition request to the tracker server to acquire the information, e.g. the IP addresses, of other BT client terminals that are downloading/uploading the same BT resource, and thus can trigger the tracker server to feed back the peer list to the BT client terminal. After that, the BT client terminal selects one or more peers from the peer list to connect, and the BT client terminal and the selected other BT client terminals can respectively notify the other party the data blocks of the BT resource that has been stored by itself according to the torrent file corresponding to the BT resource, and then exchange each other's data blocks to implement the download of the BT resource.

In the process of implementing the present disclosure, the inventor has found that the existing technology has at least the following problems.

After obtaining the BT seed file, the BT client terminal may randomly select a tracker server according to the tracker servers recorded therein. However, there are a large number of tracker servers in the BT system, and it is possible that the network quality between the BT client terminal and its selected tracker server may be poor, or the tracker server is unstable, causing the connection between the BT client terminal and the tracker server to fail or the tracker server to respond slowly. The BT client terminal needs to re-select a tracker server and establish a connection with it. Therefore, the efficiency of the BT resource download may be low.

### BRIEF SUMMARY OF THE DISCLOSURE

In order to solve the problems in the existing technology, embodiments of the present disclosure provide a request response method, a device, and a system applied to a bit torrent (BT) system. The technical solution is as follows.

In a first aspect, a request response method applied to a BT system is provided, the method including steps:
acquiring data traffic of a network export device and determining as to-be-processed traffic;
identifying peer acquisition requests of BT client terminals from the to-be-processed traffic;
determining a target peer acquisition request from the peer acquisition requests;
determining response information based on the "info hash" value in the target peer acquisition request and a preset policy; and
responding to the target peer acquisition request based on the response information.

Optionally, a method for acquiring the data traffic of the network export device of the BT client terminals includes duplicating or intercepting.

Optionally, identifying the peer acquisition requests of the BT client terminals from the to-be-processed traffic includes:
performing a matching according to the transport layer protocol and/or specific fields of the to-be-processed traffic to identify the peer acquisition requests of the BT client terminals.

Optionally, determining the target peer acquisition request from the peer acquisition requests includes:
determining one of a preset number of the peer acquisition requests that request a same resource as the target peer acquisition request.

Optionally, the response information includes an address of a target cache server, and determining the response information based on the "info hash" value in the target peer acquisition request and the preset policy includes:
determining a target resource corresponding to the "info hash" value; and
determining, according to the preset policy, the target cache server from all cache servers used to store the target resource.

Optionally, the preset policy includes:
prioritizedly selecting a cache server that shares a same network operator with and/or has the closest physical location from the target BT client terminal that sends the target peer acquisition request as the target cache server.

Optionally, responding to the target peer acquisition request based on the response information includes:
modifying the source IP address in the response information to be the destination IP address in the target peer acquisition request.

Based on the method described above, by obtaining corresponding peer acquisition requests directly from the network export device, and responding to the target peer acquisition requests, response control may be performed on the target peer acquisition requests to ensure that these target peer acquisition requests are quickly responded, and/or a reliable resource node for access is obtained. As such, to a certain extent, the problems mentioned in the background technology may be prevented from occurring. For example, a known reliable peer node is returned for the BT client terminal to connect, or a cache server with the corresponding resource is returned for the BT client terminal to connect.

In a second aspect, in order to implement the method described above, the embodiments of the present disclosure also provide a request response device, applied to a BT system. A computer program is executed on the device, and the computer program implements the method of the embodiments described above.

Optionally, the device is a network export device.

Optionally, the device is connected to the network export device, and arranged in a same machine room.

Further, the embodiments of the present disclosure also provide a request response system, including the request response device described above and at least one cache server, where the device is connected to the cache server through a network.

Optionally, the cache server receives the connection request of the BT client terminal, and performs resource interaction with the BT client terminal based on the BT protocol.

### BRIEF DESCRIPTION OF THE DRAWINGS

In order to more clearly illustrate the technical solutions of the embodiments of the present disclosure, the drawings used for illustrating the embodiments will be briefly described below. It should be understood that the following drawings merely illustrate some embodiments of the present disclosure. For those of ordinary skill in the art, other drawings can be obtained according to these drawings without any creative work.
FIG. 1 illustrates a flowchart of a request response method that is applied to a BT system according to an embodiment of the present disclosure;
FIG. 2 illustrates a schematic structural diagram of a request response system that is applied to a BT system according to an embodiment of the present disclosure.

### DETAILED DESCRIPTION

In order to make the objects, technical solutions and advantages of the present disclosure clearer, the embodiments of the present disclosure will be further described in detail below with reference to the accompanying drawings.

The embodiments of the present disclosure provide a request response method, which can be applied to a BT system. The BT system may be oriented to the entire Internet. The BT client terminal may acquire a BT seed file from the Internet, and parse it based on the BT protocol to obtain a list of tracker servers. A tracker server may be randomly selected and a peer acquisition request may be sent to it. Because the peer acquisition request that the BT client terminal sends to the tracker server generally needs to be sent out through a network export device that the BT client terminal is connected to, and then reach the tracker server. After receiving the request, the tracker server may respond, and the response may first arrive at the network export device of the BT client terminal and then reach the BT client terminal.

The method provided by the present embodiment responds to target peer acquisition requests in advance, so that the target BT client terminal can quickly acquire the peer list and start download without waiting for the response of the tracker server. As such, to a certain extent, the problem that the response cannot be obtained normally due to the failure of the tracker server or any unknown condition, such as a poor network, etc., can be avoided.

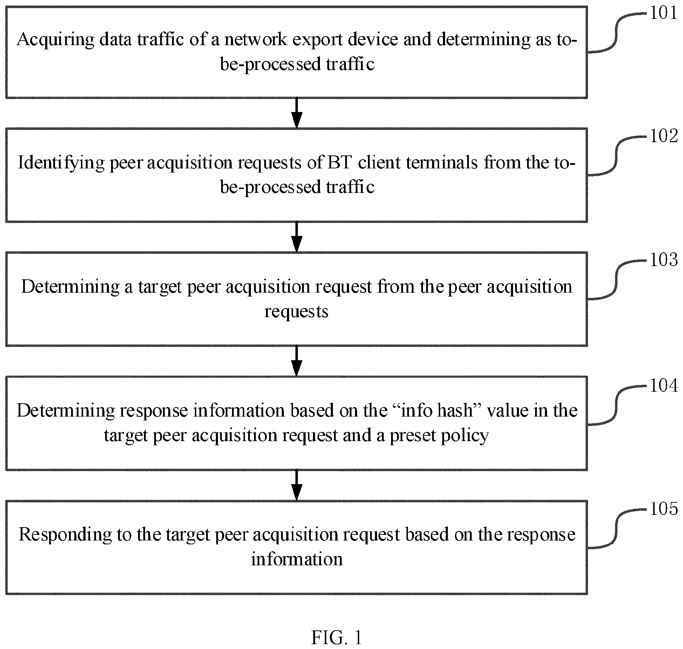

In the following, the processing flow shown in FIG. 1 will be described in detail with reference to specific implementations, and the content may be as follows:

In step 101, acquiring data traffic of a network export device and determining as to-be-processed traffic.

In the step, the network export device may be a device that the data traffic must flow through when an internal device of a local area network exchanges data with an external device, and specifically, may include a router, a switch, etc.

In the embodiments of the present disclosure, the request response method may be implemented by executing a computer program. The computer program may be directly executed on the network export device, or may be independently executed on other server devices, which can be collectively referred to as redirect servers.

In one embodiment, a redirect server may acquire the data traffic of the network export device through duplication.

Specifically, the duplication is to copy all traffic on the network export device to the local of the redirect server in a manner of optical splitting or port mirroring. In this manner, the data traffic flowing through the network export device may be transmitted normally without being affected.

In other embodiments of the present disclosure, the redirect server may also redirect the data traffic flowing through the network export device to the local through interception. In this manner, although the transmission path of the data traffic is changed, the processing of the target traffic may be smoother, such that the situation where the response from the tracker server arrives at the BT client terminal in advance may be avoid.

In step 102, identifying peer acquisition requests of BT client terminals from the to-be-processed traffic.

In one embodiment, the to-be-processed traffic obtained by the redirect server may include peer acquisition requests and a large amount of other data traffic. Therefore, the redirect server may need to first identify the peer acquisition requests from the to-be-processed traffic.

Optionally, the process of the redirect server identifying peer acquisition requests may be specifically as follows: the redirect server may perform a matching according to the transport layer protocol and/or specific fields of the to-be-processed traffic to identify the peer acquisition requests of the BT client terminals.

Specifically speaking, after obtaining the to-be-processed traffic, using data packet as a unit, the redirect server may perform a matching and filtering according to the transport layer protocol of the data packets and specific fields of the data packets to obtain the following two types of peer acquisition requests: one is the announce request to the tracker server under the HTTP and UDP protocols and initiated by the BT client terminals, and the other is the "get_peers" request to other nodes in the network under the UDP protocol and initiated by the BT client terminal through the DHT network.

It can be understood that the redirect server can periodically acquire the current data traffic based on a certain period of time, or may determine the size of the acquired traffic for each time according to the amount of the data, or acquire the traffic in real time, that is, when data traffic arrives at the network export device, the data traffic will be duplicated or intercepted to the redirect server. The present disclosure is not limited to any specific process described above.

In step 103, determining a target peer acquisition request from the peer acquisition requests.

In the step, the target peer acquisition request may be one or more randomly selected from all of the peer acquisition requests obtained by the redirect server in step 102, or may be a peer acquisition request that satisfies a preset condition.

Optionally, the preset condition may include: determining one of a preset number of the peer acquisition requests that request the same resource as the target peer acquisition request. For example, in all the currently-obtained peer acquisition requests, 10 requests are requests for downloading a same movie resource, and when the preset number is 5, then 2 of the 10 peer acquisition requests may be selected and determined as the target peer acquisition requests.

In one embodiment, except for the data traffic that is determined as the target peer acquisition requests, other data traffic will not be processed. In other embodiments of the present disclosure, when the redirect server acquires data traffic through interception, the other data traffic may be forwarded according to the original path.

It should be understood that, when determining the target peer acquisition request, the determination method may be set according to the actual requirements. In some embodiments, all the peer acquisition requests may be directly determined as the target peer acquisition requests.

In step 104, determining response information based on an "info hash" value in the target peer acquisition request and a preset policy.

In the step, the "info hash" value may be a string that is calculated by the "hash" algorithm based on the content of the BT resource, and used to uniquely identify the BT resource in the network.

In one embodiment, after determining the target peer acquisition request, the redirect server may be able to extract the "info hash" value carried by the target peer acquisition request.

Specifically, acquiring the "info hash" value may include the following methods: for an "announce" request under an HTTP protocol, the "info hash" value may be stored in the "info hash" parameter of the "path" field of the "GET" request under the HTTP protocol; for an "announce" request under a UDP protocol, the "info hash" value may be stored in the UDP load with an offset of 16 to 20 bytes; for a "get_peers" request in a DHT network, the "info hash" value may be stored in the "info_hash" field of the B encoding dictionary.

The preset policy may be a pre-configured response policy, and may be configured according to the actual requirements. For example, the corresponding resource nodes may be allocated based on the identity information of the BT client terminal, such as returning resource nodes that share the same network operator with the BT client terminal, or nodes having close physical locations. In one embodiment, the preset policy may include: prioritizedly selecting a cache server that shares a same network operator with and/or has the closest physical location from the target BT client terminal that sends the target peer acquisition request as the target cache server, and returning the information of the target cache server as the response information to the target BT client terminal.

In one embodiment, the processing of step 104 may specifically include: determining a target resource corresponding to the "info hash" value; and determining, according to the preset policy, the target cache server from all cache servers used to store the target resource.

After extracting the "info hash" value carried by the target peer acquisition request, the redirect server may first determine the target resource corresponding to the "info hash" value, and then, the redirect server may query the cache server used to store the target resource in all the cache servers, and may then determine the target cache server from these cache servers based on the preset policy.

Specifically, after determining the target peer acquisition request, the redirect server may extract the IP address of the target BT client terminal carried by the target peer acquisition request. Afterwards, the redirect server may, according to the IP address of the target BT client terminal, prioritizedly select a cache server that shares the same network operator with and/or has the closest physical location from the target BT client terminal as the target cache server.

In step 105, responding to the target peer acquisition request based on the response information.

After determining the response information for the target peer acquisition request, the redirect server may respond to the target peer acquisition request based on the response information, that is, the response information may be fed back to the target BT client terminals corresponding to the target peer acquisition request.

Specifically, when the redirect server responds to the target peer acquisition request, the source IP address in the response information may be modified to be the destination IP address in the target peer acquisition request.

It should be understood that the destination IP address in the target peer acquisition request may be the IP address of a tracker server, or the IP address of a DHT network node, and the actual IP address of the response information should be the IP address of the redirect server. Here, the IP address of the redirect server may be modified to be the destination IP address in the target peer acquisition request, so that when receiving the response information, the BT client terminal can identify the response information as the response information fed back by the requested tracker server or the DHT network node, and may, according to a normal BT-resource download method, connect to the peer node in the response information based on the response information and implement resource interaction based on the BT protocol.

It can be seen that the request response method provided by the embodiments of the present disclosure can be applied to a BT system. By directly acquiring the data traffic from a network export device, and responding to the target peer acquisition request, the part of the target peer acquisition request can be ensured to receive quick response. Also, preferred peer nodes, such as other BT client terminals or cache servers that have physical locations close to and/or share a same network operator with the target BT client terminal, or cache servers that cache all requested resources may be selected according to a preset policy to respond the target peer acquisition request. As such, the target BT client terminal can more easily acquire the responding requested resources, thereby improving the resource download rate. In addition, through the control of these factors, overall planning for BT traffic may be achieved.

Further, in the embodiments of the present disclosure, the peer node information in the response information may only include the cache server. When the target BT client terminal establishes a connection with the cache server, according to the resource sharing characteristics of the BT protocol, while providing the corresponding requested resources to the target BT client terminal, the cache server may also be able to acquire a part of the segments of the requested resources from the target BT client terminal, such that no additional network resources are needed to complete the resource caching on the cache server. Based on that, the cache server can perform corresponding resource storage according to the user request, and can also directly acquire the resource file from the requesting user. Preferably, in one embodiment, when determining the target peer acquisition request, the method, in which one of the requests from a preset number of peer acquisition requests that request the same resource is determined as a peer acquisition request, may be adopted. As such, repeatedly directing the peer acquisition requests for a same resource from a same BT client terminal to the cache server, and thus causing the corresponding resource unable to be obtained normally may be avoided.

For example, in one embodiment, after the redirect server determines the target resource based on the "info hash" value, when the resource is not currently cached on the cache server, the redirect server may select a cache server according to the preset policy, and may specify the cache server to store the target resource. In addition, the information of the cache server may be responded to the target BT client terminal, and the BT client terminal may initiate a resource acquisition request to the cache server according to the response information. As such, the cache server may first acquire a part of the target resource from the target BT client terminal, and based on the same method, successively acquire other parts of the target resource from other target BT client terminals, thereby implementing the download of the cache resource.

Based on the same technical concept, the embodiments of the present disclosure further provide a request response device, which can be applied to a BT system. A computer program may be executed on the device, and the computer program may be able to implement the method in the embodiments described above.

Optionally, the device may be a network export device that is connected to the BT client terminal, such as a router or a switch, or may be any other independently operated server device connected to the network export device and disposed in the same machine room.

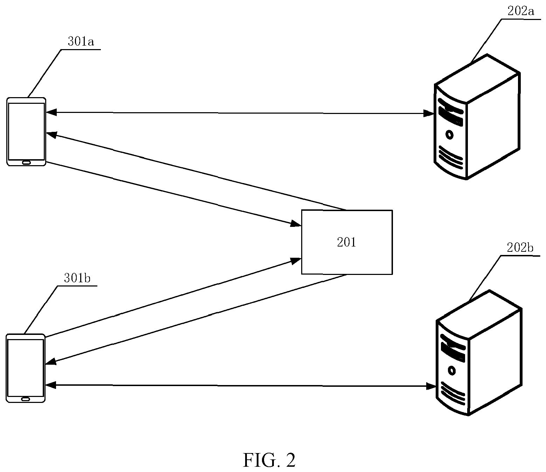

Moreover, the embodiments of the present disclosure further provide a request response system. As shown in FIG. 2, the request response system can be applied to a BT system, and may include a request response device 201 and at least one cache server 202 (indicated by 202a, 202b in the figure) connected to the request response device 201 through a network. The cache server 202 may be able to communicate with BT client terminals 301 (indicated by 301a, 301b in the figure) in the BT system based on the BT protocol.

When the target BT client terminal 301a in the BT system receives the response information returned by the request response device 201, it may first initiate a connection request to the cache server 202a in the response information. The cache server 202a may receive the connection request of the target BT client terminal 301a, and may perform resource interaction with the target BT client terminal 301a based on the BT protocol. The resource interaction may include providing data segments of the target resource to the target BT client terminal 301a, and/or acquiring the data segments of the desired target resource from the target BT client terminal 301a.

Those skilled in the art shall understand that the implementation of all or part of the steps of the above embodiments may be completed by hardware, or may be completed by using a program to instruct related hardware. The program may be stored in a computer readable storage medium. The storage medium mentioned above may be a read only memory, a magnetic disk or optical disk, etc.

The above are only the preferred embodiments of the present disclosure, and are not intended to limit the present disclosure. Any modifications, equivalents, improvements, etc., that are within the spirit and scope of the present disclosure, shall be included in the scope of protection of the present disclosure.

## Claims

1. A request response method applied to a bit torrent (BT) system, comprising:
acquiring data traffic of a network export device of BT client terminals and determining the data traffic as to-be-processed traffic;
identifying peer acquisition requests of the BT client terminals from the to-be-processed traffic;
determining a target peer acquisition request from the peer acquisition requests;
determining response information based on an "info hash" value in the target peer acquisition request and a preset policy; and
responding to the target peer acquisition request based on the response information.

2. The method according to claim 1, wherein the acquiring the data traffic of the network export device of the BT client terminals includes duplicating or intercepting.

3. The method according to claim 1, wherein the identifying the peer acquisition requests of the BT client terminals from the to-be-processed traffic includes:
performing a matching according to a transport layer protocol and/or specific fields of the to-be-processed traffic to identify the peer acquisition requests of the BT client terminals.

4. The method according to claim 1, wherein the determining the target peer acquisition request from the peer acquisition requests includes:
determining one of a preset number of peer acquisition requests that request a same resource as the target peer acquisition request.

5. The method according to claim 1, wherein the response information includes an address of a target cache server, and the determining the response information based on the "info hash" value in the target peer acquisition request and the preset policy includes:
determining a target resource corresponding to the "info hash" value; and
determining, according to the preset policy, the target cache server from all cache servers used to store the target resource.

6. The method according to claim 5, wherein the preset policy includes:
prioritizedly selecting a cache server that shares a same network operator with and/or has a closest physical location from a target BT client terminal that sends the target peer acquisition request as the target cache server.

7. The method according to claim 1, wherein the responding to the target peer acquisition request based on the response information includes:
modifying a source IP address in the response information to be a destination IP address in the target peer acquisition request.

8. A request response device, applied to a BT system, wherein a computer program is executed on the device, and the computer program implements the method according to any one of the claims 1-7.

9. The request response device according to claim 8, wherein the device is the network export device.

10. The request response device according to claim 8, wherein the device is connected to the network export device, and arranged in a same machine room.

11. A request response system, comprising the device according to any one of claims 8-10 and at least one cache server, wherein, the device and the at least one cache server are connected through a network.

12. The request response system according to claim 11, wherein the at least one cache server receives connection requests of the BT client terminals, and performs resource interaction with the BT client terminals based on a BT protocol.
